Europäisches Patentamt

European Patent Office

Office européen des brevets

(11) Numéro de publication: **0 331 962**
**A1**

(12) **DEMANDE DE BREVET EUROPEEN**

(21) Numéro de dépôt: 89102934.0

(22) Date de dépôt: 20.02.89

(51) Int. Cl.⁴: **B23K 26/04**

(30) Priorité: 29.02.88 FR 8802473

(43) Date de publication de la demande:
13.09.89 Bulletin 89/37

(84) Etats contractants désignés:
BE CH DE ES GB IT LI NL SE

(71) Demandeur: FRAMATOME
Tour Fiat 1, Place de la Coupole
F-92400 Courbevoie(FR)

(72) Inventeur: Gaffard, Jean-paul
5 rue de la Paroisse
F-77300 Fontainebleau(FR)
Inventeur: Ravelet, Robert
84 boulevard du Docteur Gathelin
F-91160 Longjumeau(FR)
Inventeur: Chabassier, Geneviève
141 rue d'Alésia
F-75014 Paris(FR)
Inventeur: Griffaton, Jacques
6bis rue Saint Georges
F-71100 Chalon sur Saone(FR)

(74) Mandataire: Weinmiller, Jürgen et al
Lennéstrasse 9 Postfach 24
D-8133 Feldafing(DE)

(54) **Système d'alignement d'un faisceau de puissance.**

㊸ Le système d'alignement selon l'invention est par exemple destiné à permettre une soudure réparatrice par rayonnement infrarouge à l'aide d'une tête de soudage (30) dans un tube d'échange thermique (14) à l'intérieur de la boîte à eau (20) d'un générateur de vapeur associé à un réacteur nucléaire. Un faisceau de puissance (PE, PL, PS) est transporté jusque dans l'axe (24) d'un tube à traiter (14) grâce à deux déviateurs optiques motorisés à savoir un "émetteur" (11) fixé près du trou d'accès à cette boîte à eau et un "récepteur" (12) porté par un "porteur" (22) jusqu'à l'entrée du tube à traiter. Il est entouré coaxialement par un faisceau visible (AE, AL, AS) qui avec l'aide de rétroréflecteurs (15) et d'un miroir d'autocollimation (17) portés par le récepteur (12), et de détecteurs (16, 18) portés par l'émetteur (11), permet d'établir et de maintenir la liaison optique entre l'émetteur et le récepteur.

L'invention s'applique notamment à l'industrie nucléaire.

FIG. 2

## Système d'alignement d'un faisceau optique

La présente invention concerne l'alignement d'un faisceau optique, par exemple d'un faisceau laser infrarouge de puissance utilisé pour une opération de soudage. Un tel alignement consiste, à partir d'un faisceau d'entrée qui est fourni par une source de puissance avec une position et une direction imposées, à obtenir un faisceau de sortie dont la position et la direction peuvent être ajustées pour en permettre une utilisation efficace.

La présente invention s'applique plus particulièrement au cas où un organe d'utilisation devant recevoir le faisceau de sortie pour effectuer un traitement, est mobile indépendamment de la source de lumière. Cette dernière est par exemple un laser à gaz carbonique fixe présentant un poids et/ou un encombrement relativement importants pour fournir un faisceau infrarouge avec la puissance nécessaire au soudage d'une manchette dans un tube de générateur de vapeur d'un réacteur nucléaire. Pour des raisons d'encombrement cette source ne peut être installée qu'à l'extérieur de la boîte à eau du générateur, donc loin de l'endroit où la puissance est nécessaire. Le faisceau doit alors être transporté du laser à une tête de soudage qui constitue ledit organe d'utilisation et qui est installée dans le tube à réparer et un alignement est nécessaire. Entre la source et le lieu d'utilisation il y a deux obstacles à franchir :

1/ Pénétrer dans la boîte à eau
2/ Pénétrer dans le tube du faisceau.

Selon une disposition connue on morcelle le trajet à effectuer en trois tronçons de manière à obtenir deux points intermédiaires en vue l'un de l'autre, situés à l'intérieur de la boîte à eau. En ces deux points sont placés des dispositifs qui seront appelés ci-après respectivement émetteur et récepteur. Les trajets source-émetteur et récepteur-tête de soudage sont parcourus selon des dispositions connues, ce dernier trajet se faisant selon l'axe du tube à réparer et pouvant être défini par rapport au récepteur par appui de ce dernier sur une surface solidaire de ce tube.

Reste à commander l'émetteur et le récepteur de manière à obtenir un faisceau de sortie correctement aligné.

On connaît un système assurant un tel alignement. Ce système connu comporte un certain nombre de dispositions qui, considérées quant à leurs fonctions indiquées ci-après, sont communes à ce système et à certains systèmes selon la présente invention et qui vont être d'abord indiquées de manière générale : Selon ces dispositions communes le système comporte

- un émetteur pour recevoir un rayonnement principal de puissance et pour le transmettre sous la forme d'un faisceau principal de liaison, ce dernier étant commandable en direction de manière qu'il puisse être dirigé vers un récepteur mobile,
- ledit récepteur, ce récepteur étant apte, quand il reçoit utilement ce faisceau principal de liaison, à le transmettre sous la forme d'un faisceau principal de sortie en faisant apparaître une déviation angulaire commandable entre ces deux faisceaux,
- un porteur mobile portant ce récepteur et commandable en position pour commander la position de ce faisceau principal de sortie,
- des moyens de positionnement commandant la position de ce porteur pour amener ledit récepteur sur un axe d'utilisation sur lequel la puissance dudit faisceau principal de sortie doit être utilisée,
- et des moyens d'orientation optique comportant :
- une source auxiliaire pour engendrer un rayonnement auxiliaire transmis par ledit émetteur sous la forme d'un faisceau auxiliaire de liaison de même direction que ledit faisceau principal de liaison,
- des moyens de commande d'émetteur sensibles à l'irradiation dudit récepteur par une partie dudit rayonnement auxiliaire pour permettre de commander ledit émetteur de manière que lesdits faisceaux auxiliaire et principal de liaison soient dirigés vers ce récepteur,
- un miroir de récepteur associé audit récepteur pour renvoyer une partie restante dudit rayonnement auxiliaire vers ledit émetteur sous la forme d'un faisceau de retour dont la direction dépend de ladite déviation angulaire du récepteur,
- et des moyens de commande de récepteur associés audit émetteur et sensibles à l'écart de direction dudit faisceau de retour par rapport auxdits faisceaux de liaison pour permettre de commander ledit récepteur de manière qu'il reçoive utilement ledit faisceau principal de liaison et qu'il forme ledit faisceau principal de sortie selon ledit axe d'utilisation.

Ce système connu est décrit dans la demande européenne EP-A-238171.

Il présente les inconvénients suivants :
- utilisation, dans le milieu hostile qui entoure le récepteur, de matériels fragiles comme les détecteurs, capteurs, caméra vidéo
- mise en oeuvre discontinue
- alignement à refaire à chaque changement de tube à traiter
- complexité mécanique
- coût élevé

La présente invention a notamment pour but de réaliser un système simple et précis utilisable de manière continue au cours d'opérations successives de soudure ou autre traitement mettant en oeuvre un faisceau de puissance. Elle a également pour but de réaliser un tel système avec un nombre minimal d'appareils fragiles associés au récepteur qui se déplace, selon l'exemple donné, dans la boîte à eau.

Des systèmes selon la présente invention comportent

- un émetteur pour recevoir au moins un faisceau d'entrée et pour le transmettre sous la forme d'un faisceau de liaison,
- un récepteur mobile à distance dudit émetteur,
- et des moyens de commande pour que ce récepteur reçoive ce faisceau de liaison et le transforme en un faisceau de sortie aligné sur un axe d'utilisation.

Plus particulièrement un système selon un premier aspect de la présente invention comporte :
- ledit émetteur pour recevoir un faisceau principal d'entrée constitué d'un rayonnement principal à utiliser et pour le transmettre sous la forme d'un faisceau principal de liaison commandable en direction,
- ledit récepteur pour recevoir ce faisceau principal de liaison, et pour lui appliquer une déviation angulaire commandable propre à le transformer en un faisceau principal de sortie aligné sur un axe d'utilisation lié à une structure extérieure au dit système d'alignement,
- et des moyens d'orientation optique comportant :
- une source auxiliaire pour engendrer un rayonnement auxiliaire sous la forme d'un faisceau auxiliaire d'entrée aligné sur le trajet dudit faisceau principal d'entrée de manière que ce faisceau auxiliaire d'entrée soit transformé par ledit émetteur en un faisceau auxiliaire de liaison aligné sur le trajet du dit faisceau principal de liaison, et que ce faisceau auxiliaire de liaison soit transformé par ledit récepteur en un faisceau auxiliaire de sortie aligné sur le trajet dudit faisceau principal de sortie,
- des moyens de commande d'émetteur sensibles à une fraction du rayonnement dudit faisceau auxiliaire de liaison reçu par ledit récepteur pour permettre de commander ledit émetteur de manière que lesdits faisceaux auxiliaire et principal de liaison soit dirigés vers ce récepteur,
- et des moyens de commande de récepteur sensibles à une fraction du rayonnement dudit faisceau auxiliaire de liaison reçu par ledit récepteur pour permettre de commander ladite déviation angulaire de manière que lesdits faisceaux principal et auxiliaire de sortie soient alignés sur ledit axe d'utilisation,
- ledit système d'alignement étant caractérisé par le fait que ledit faisceau auxiliaire d'entrée est un faisceau tubulaire formé coaxialement autour dudit faisceau principal d'entrée, lesdits moyens de commande d'émetteur et de récepteur étant placés en dehors du trajet dudit rayonnement principal.

Cette disposition simple permet d'éviter que lesdits moyens de commande d'émetteur et de récepteur gênent la propagation du faisceau principal, ou qu'ils soient détériorés par ce rayonnement, sans qu'il y ait nécessité pour cela de les monter de manière amovible. Il en résulte une simplification considérable du système qui se traduit notamment, malgré le fait que la section de passage totale des rayonnements est augmentée, par une facilité accrue d'accès à travers des passages étroits. Il est bien entendu souhaitable pour cela que l'épaisseur radiale dudit faisceau auxiliaire de liaison soit sensiblement inférieure au diamètre dudit faisceau principal de liaison.

De plus l'absence de tout déplacement de ces éléments permet un contrôle permanent de l'alignement et la réalisation en continu, à l'aide du faisceau principal, d'opérations de traitement dans des lieux, par exemple des tubes à traiter, successifs.

Selon une disposition préférée :
lesdits moyens de commande d'émetteur et de récepteur comportent :
- des moyens de renvoi de la lumière dudit faisceau auxiliaire de liaison vers ledit émetteur,
- et un séparateur annulaire qui entoure ledit faisceau principal d'entrée, et qui dirige la lumière renvoyée par lesdits moyens de renvoi vers des moyens de détection et d'analyse.

Un système selon un deuxième aspect de la présente invention comporte
- ledit émetteur pour recevoir au moins un faisceau d'entrée et pour le transmettre sous la forme d'un faisceau de liaison commandable en direction,
- ledit récepteur,
- et des moyens de commande d'émetteur sensibles à l'irradiation dudit récepteur par ledit faisceau de liaison pour permettre de commander ledit émetteur de manière qu'il dirige ce faisceau vers ce récepteur,
- ledit système d'alignement étant caractérisé par le fait que lesdits moyens de commande d'émetteur comportent un ensemble rétroréflecteur lié audit récepteur et constitué de plusieurs rétroréflecteurs renvoyant chacun une partie correspondante dudit faisceau de liaison dans la direction même de ce faisceau de liaison pour constituer un faisceau rétroréfléchi,
- et un détecteur de faisceau rétroréfléchi lié audit émetteur et formant une image dudit ensemble rétroréflecteur sur un système d'analyse d'image permettant de détecter la position dudit récepteur par rapport au dit faisceau de liaison. Ce système d'analyse d'image constitue ainsi un détecteur de position.

De préférence ledit système d'analyse d'image permet de comparer les flux lumineux reçus dans divers éléments d'image qui sont formés respectivement par les divers dits rétroréflecteurs et qui font parties de ladite image dudit ensemble rétroréflecteur.

De préférence encore lesdits rétroréflecteurs sont au nombre de trois au moins et sont répartis angulairement en périphérie dudit faisceau de liaison (PL).

Ces dispositions permettent de diriger avec précision le faisceau de liaison vers le récepteur à l'aide de moyens de détection de lumière liés à l'émetteur. Il est en effet facile à un système d'analyse d'image de détecter un éventuel écart du faisceau de liaison par rapport au récepteur, parce qu'un tel écart, même s'il est petit, se traduit par des différences facilement détectables entre les éclairements de divers éléments de l'image de l'ensemble rétroréflecteur.

Elles permettent une mesure qui est relative, par exemple celle de la différence ou du rapport de deux flux lumineux, et qui est aussi directionnelle, la direction de l'écart détecté correspondant aux positions angulaires des rétroréflecteurs qui créent les éléments d'image dans lesquels le flux lumineux est modifié.

De préférence encore lesdits rétroréflecteurs laissent entre eux des intervalles angulaires pour une lumière utilisable par d'autre dits moyens de commande.

Un système selon un troisième aspect de la présente invention comporte :
- ledit émetteur,
- ledit récepteur recevant ce faisceau de liaison et lui appliquant une déviation angulaire commandable pour le transformer en ledit faisceau de sortie,
- et des moyens de commande de récepteur pour permettre de commander ladite déviation commandable de manière à aligner ledit faisceau de liaison sur un axe d'utilisation lié à une structure extérieure audit système d'alignement, ces moyens de commande de récepteur comportant eux-mêmes :
- un miroir de récepteur lié audit récepteur pour renvoyer une partie de la lumière dudit faisceau de liaison vers ledit émetteur sous la forme d'un faisceau de retour dont la direction est affectée par ladite déviation commandable,
- et un détecteur écartométrique lié audit émetteur et sensible aux déviations de ce faisceau de retour,
- ledit système d'alignement étant caractérisé par le fait que ledit miroir de récepteur est placé sur le trajet dudit faisceau de sortie de sorte que ledit faisceau de retour est formé à partir de ce faisceau de sortie et traverse ledit récepteur en retour, ce miroir présentant un axe perpendiculaire à sa surface et étant monté pour s'orienter par rapport à ladite structure extérieure de manière à aligner son axe sur ledit axe d'utilisation.

De préférence ledit miroir de récepteur est porté à distance dudit récepteur par une pièce de sortie liée à celui-ci, cette pièce de sortie étant munie de moyens d'orientation qui s'appuient sur ladite structure extérieure pour orienter ledit miroir de récepteur par rapport audit axe d'utilisation. Ce miroir est un miroir annulaire d'autocollimation.

Ces dispositions simples permettent auxdits moyens de commande de récepteur de tenir compte des éventuelles déformations ou déréglages qui peuvent affecter le récepteur, et cela sans nécessiter aucun élément supplémentaire par rapport au système connu précédemment mentionné. Or il est connu des spécialistes de l'optique que de tels déformations ou déréglages peuvent résulter de nombreuses causes, notamment de variations ou de gradients de température, ou d'usure de pièces mécaniques, et qu'ils peuvent provoquer des défauts d'alignement gênants.

De préférence enfin le système selon l'invention comporte un calculateur commun alimenté par les deux dits détecteurs de position et écartométrique. Un regroupement des éléments électroniques constitués par ce calculateur et ces deux détecteurs diminue l'encombrement et la fragilité du système.

La présente invention a également pour objet un procédé de traitement par rayonnement, notamment de soudage, à l'intérieur de pièces d'accès difficile, notamment de tubes dans une centrale nucléaire, ce procédé comportant les opérations suivantes,
- on introduit dans une pièce à traiter une tête de traitement,
- on engendre un rayonnement de traitement à distance de cette pièce,
- et on aligne un faisceau de ce rayonnement selon un axe d'utilisation lié à cette pièce pour alimenter cette tête de traitement,
- ce procédé étant caractérisé par le fait qu'on aligne ce faisceau à l'aide d'un système d'alignement tel que décrit ci-dessus selon au moins un aspect de l'invention.

A l'aide des figures schématiques ci-jointes on va décrire plus particulièrement ci-après, à titre d'exemple non limitatif, comment la présente invention peut être mise en oeuvre dans le cadre de l'exposé qui en a été donné ci-dessus. Lorsqu'un même élément est représenté sur plusieurs figures il y est désigné par le même signe de référence.

Le système décrit comporte les dispositions mentionnées ci-dessus selon les trois dits aspects de la présente invention.

La figure 1 représente une vue d'une partie de ce système prévue pour engendrer et mutuellement aligner les deux dits faisceaux d'entrée.

La figure 2 représente une vue des autres parties du même système lors de la mise en oeuvre du procédé selon l'invention.

La figure 3 représente une vue en coupe d'un ensemble optique motorisé pouvant constituer ledit émetteur ou ledit récepteur.

La figure 4 représente une vue en perspective d'un ensemble rétroréflecteur inclus dans le même système.

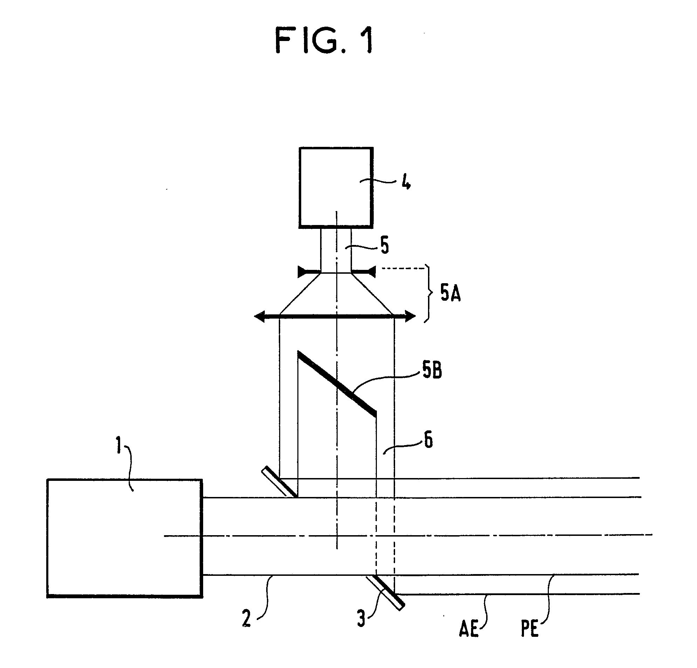

Conformément à la figure 1, un laser de puissance à gaz carbonique 1 émet un faisceau de puissance infrarouge 2 constituant un rayonnement principal. Sur l'axe de ce faisceau est disposé un miroir annulaire 3, dont le plan fait un angle de 45° et dont le centre coïncide avec l'axe du faisceau.

Un laser He Ne 4 émet un faisceau d'un rayonnement auxiliaire visible 5. Ce faisceau est agrandi en 5A puis envoyé sur un séparateur 5B qui est opaque dans sa partie centrale. On obtient ainsi un faisceau visible tubulaire 6 dont le diamètre intérieur correspond sensiblement au diamètre extérieur du faisceau de puissance. Ce faisceau est envoyé sur le miroir annulaire 3 et devient ainsi ledit faisceau auxiliaire d'entrée AE qui est coaxial audit faisceau principal d'entrée PE constitué par le faisceau 2. Un réglage mécanique fin de la position du miroir 3 permet d'aligner parfaitement les deux faisceaux à l'aide d'une cible auxiliaire au moment de l'installation des lasers près du lieu de travail.

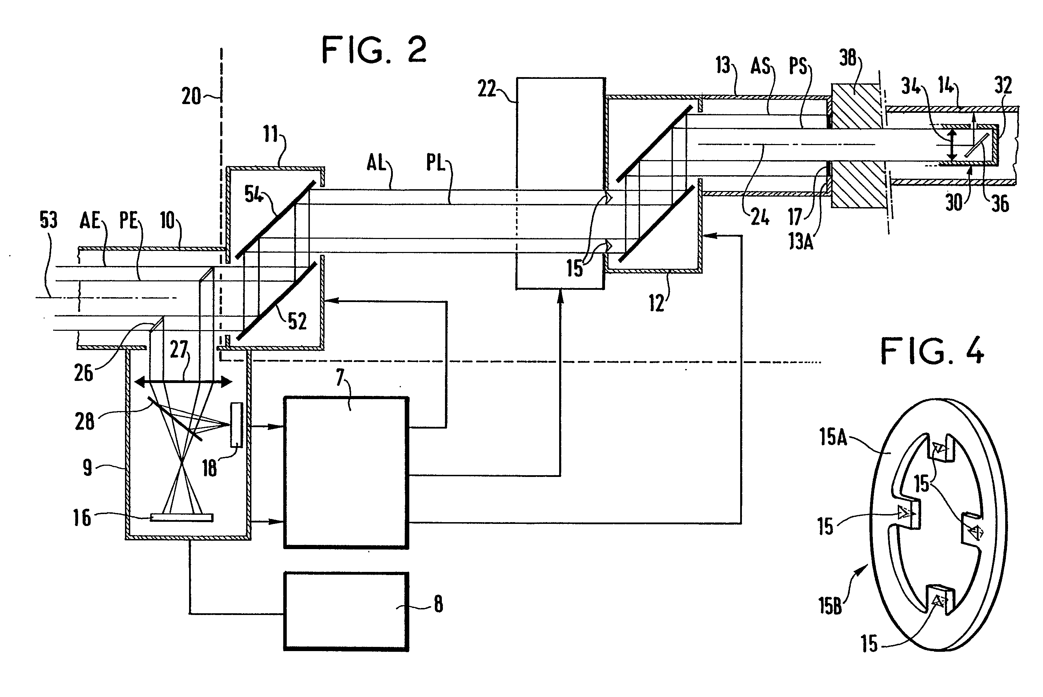

La figure 2 représente les moyens utilisés pour le transport du faisceau principal jusqu'à ladite tête de traitement 30. Cette dernière est une tête de soudage. Elle comporte une enveloppe 32, une lentille de focalisation 34 et un miroir à 45 degrés 36. Elle a été introduite dans un tube à traiter 14 dans lequel une manchette doit être soudée et dont l'axe 24 constitue ledit axe d'utilisation. Ce tube est situé à l'intérieur de la boîte à eau 20 d'un générateur de vapeur non représenté comportant comme connu de nombreux autres tubes dans lesquels il peut être nécessaire d'effectuer aussi des traitements de soudage.

Les moyens de transport de faisceau sont constitués par deux ensembles optiques déviateurs de faisceau. Ces deux ensembles constituent ledit émetteur 11 et ledit récepteur 12. Ils sont motorisés de manière à apporter chacun une déviation qui est représentée comme nulle sur la figure 2, mais qui est commandée selon deux coordonnées angulaires. De plus le récepteur 12 est monté sur un porteur 22 qui est lui aussi motorisé de manière que sa position soit commandée selon une, deux ou trois coordonnées de position c'est-à-dire que la position du récepteur 12 est elle aussi commandée. Elle l'est de manière à centrer une fenêtre de sortie de ce récepteur sur l'axe d'utilisation.

La direction des faisceaux entrant dans l'émetteur 11 est imposée (c'est celle de l'axe du laser 1, par rapport auquel l'émetteur 11 est réglé au montage du système), de même que celle des faisceaux sortant du récepteur 12 (c'est celle de l'axe du tube à traiter 14, le récepteur étant guidé par rapport à ce tube par l'intermédiaire d'un tube 13 solidaire de ce récepteur et venant en appui contre une plaque tubulaire non représentée solidaire de ce tube). La commande des déviations angulaires de l'émetteur et du récepteur permet donc de diriger les faisceaux de sortie de l'émetteur vers le récepteur et de faire en sorte que les faisceaux d'entrée susceptibles d'être utilement reçus par le récepteur proviennent de la direction de l'émetteur, de manière à assurer une liaison optique entre l'émetteur et le récepteur. Cette liaison est réalisée par lesdits faisceaux de liaison principal PL et auxiliaire AL résultant de la déviation des faisceaux d'entrée PE et AE par l'émetteur 11.

Les composants du système d'alignement sont groupés en deux ensembles :

Un ensemble fixe est situé près du trou d'homme d'accès à la boîte à eau 20. Il comprend à l'extérieur de cette boîte :

- le laser de puissance 1,
- le laser auxiliaire 4,
- le dispositif 5A, 5B, 3 utilisé pour l'alignement mutuel des faisceaux de ces deux lasers,
- un calculateur 7,
- un boîtier de contrôle vidéo 8,
- un tube 10 pénétrant dans la boîte à eau 20.

A l'intérieur de la boîte à eau 20 l'ensemble fixe comprend, à l'extrémité du tube 10, l'ensemble optique motorisé constituant l'émetteur 11.

Le système d'alignement comporte en outre un ensemble embarqué sur un porteur 22 installé dans la boîte à eau 20. Cet ensemble est mobile tout en étant accroché sous la plaque tubulaire. Il comprend :

- un ensemble optique motorisé constituant le récepteur 12,
- ledit tube de liaison 13
- un outillage de manchonnage 38 comportant la tête de soudage 30.

Le faisceau de liaison auxiliaire AL est partiellement rétroréfléchi vers l'émetteur 11 par quatre rétroréflecteurs 15 fixés sur un support 15A (voir fig.4), lui même fixé sur le récepteur en regard de l'émetteur. Ces rétro-réflecteurs présentent la forme bien connue de coins de cubes et ont la propriété de renvoyer la lumière dans la direction d'où elle vient quelle que soit leur orientation. Ils constituent un ensemble rétroréflecteur 15B.

Le faisceau rétroréfléchi par l'ensemble 15B est envoyé à travers l'émetteur 11 sur un séparateur annulaire 26 qui le réfléchit, à travers une lentille 27, sur un autre séparateur 28 constitué par un miroir semi-transparent. La lumière qui a traversé le séparateur 28 forme des taches lumineuses qui constituent une image de l'ensemble rétroréflecteur 15 dans une caméra 16. Cette image comporte quatre taches qui reçoivent respectivement les flux lumineux des quatre faisceaux élémentaires renvoyés par les quatre rétroréflecteurs, et qui constituent chacune un élément d'image correspondant à l'un de ces rétroréflecteurs.

La caméra 16 permet notamment de comparer les flux lumineux dans ces quatre éléments d'image. Avec l'aide de cette lentille, cette caméra constitue ledit détecteur de position. Elle a des fonctions complexes d'analyse d'image et constitue un système d'analyse de position. A partir des résultats de cette analyse, par action sur les moteurs de l'émetteur, on règle parfaitement la direction pour assurer son incidence sur le récepteur. De plus, par asservissement de la commande des moteurs de l'émetteur sur l'analyse de l'image reçue en retour sur la caméra 16, on peut faire suivre en continu le récepteur par le faisceau incident.

La partie non réfléchie du rayonnement auxiliaire traverse le récepteur 12 pour former un faisceau auxiliaire de sortie AS autour du faisceau principal de sortie PS. Ce faisceau auxiliaire arrive sur un miroir de récepteur annulaire autocollimateur 17 porté par le tube 13 et situé à l'entrée du tube à traiter 14. Le tube 13 constitue ladite pièce de sortie du récepteur. Il comporte un épaulement annulaire 13A qui s'appuie par l'intermédiaire de l'outillage 38, sur la plaque tubulaire non représentée à laquelle est lié le tube 14. On assure ainsi la coïncidence de l'axe du miroir de récepteur 17 avec l'axe du tube à traiter 14.

Le rayonnement renvoyé par ce miroir de récepteur constitue ledit faisceau de retour. Il traverse le récepteur 12 et l'émetteur 11, se réfléchit sur le séparateur 26 et, à travers la lentille 27, sur le séparateur 28 pour arriver sur une caméra 18 qui constitue ledit détecteur écartométrique et qui est située, comme la caméra 16, dans le boîtier 9. L'image formée par ce rayonnement sur cette caméra 18 est analysée par cette dernière qui fournit des signaux représentatifs de deux coordonnées de l'écart angulaire du faisceau auxiliaire de sortie AS, et donc aussi du faisceau principal de sortie PS, par rapport à l'axe d'utilisation 24.

Par action sur les moteurs du récepteur, on règle l'axe des faisceaux de sortie de manière que celui-ci soit aligné avec l'axe 24 du tube 14 qui est le même que celui du miroir 17.

Par asservissement de la commande des moteurs du récepteur sur l'analyse de l'image formée en retour sur la caméra 18, on peut assurer l'alignement des faisceaux de sortie avec l'axe du tube à traiter 14 quels que soient les mouvements ou variations des éléments.

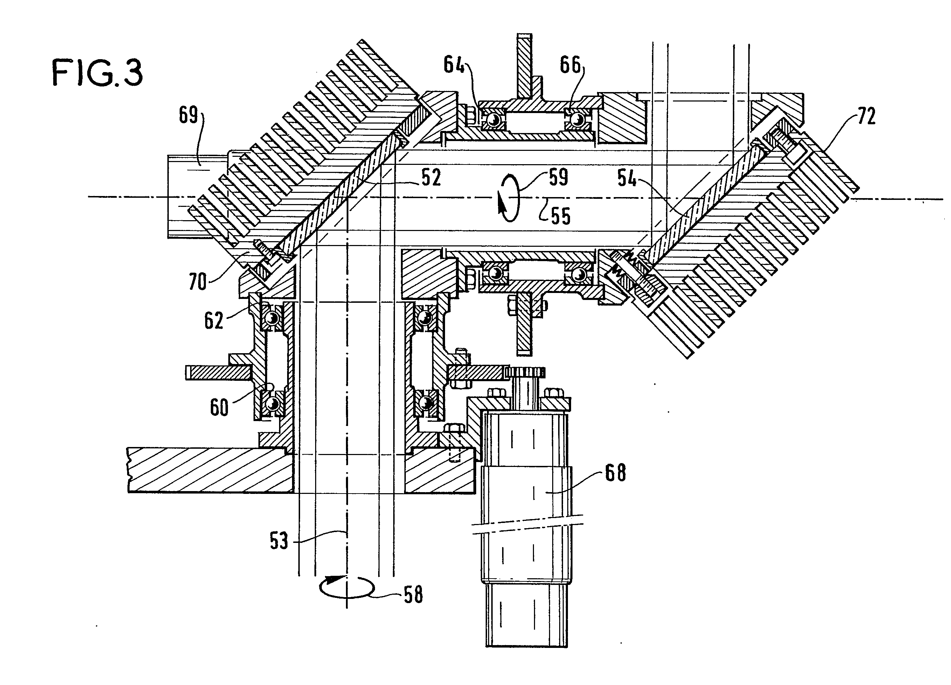

Conformément à la figure 3 chaque ensemble optique motorisé tel que l'émetteur 11 ou le récepteur 12 reçoit un faisceau composite constitué par le rayonnement principal entouré par le rayonnement auxiliaire avec un axe commmun qui est dévié à chaque réflexion. Cet ensemble, par exemple l'émetteur 11, comporte les éléments suivants :

- Deux miroirs plans 52 et 54 inclinés à 45 degrés sur les axes 53 et 55 des faisceau qu'ils reçoivent et tournant autour de cet axe ce qui permet de balayer tout l'espace autour de cet ensemble comme représenté par les flèches 58 et 59.
- Des roulements 60, 62, 64 et 66 pour permettre et guider ces rotations.
- Deux moteurs 68 et 69.
- et des radiateurs 70 et 72 pour porter les miroirs 52 et 54 et pour les refroidir lorsqu'ils sont soumis au rayonnement principal.

Une opération de soudage à l'aide du système précédemment décrit se fait comme suit, après une mise en place initiale des deux dits ensembles fixe et embarqué.

Une première opération se fait par calcul car on connait les coordonnées de la position initiale de l'ensemble embarqué.

On met cet ensemble en position convenable, par commande des moteurs du porteur 22, avec utilisation desdits moyens de guidage mécanique non représentés pour orienter convenablement le récepteur 12 par rapport au tube à traiter 14. On met aussi la tête de soudage 30 en place dans ce tube par des moyens connus sans rapport avec la présente invention.

Pour la suite des opérations la liaison émetteur récepteur est assurée par les commandes précédemment décrites. Dans un premier temps seul le rayonnement auxiliaire est utilisé.

Une fois l'alignement obtenu, le laser de puissance 1 est mis en fonctionnement.

Un avantage de ce système est que l'on peut utiliser simultanément ou séparément les deux rayonnements. En cas d'utilisation séparée, on utilise le rayonnement auxiliaire visible uniquement pour le préréglage initial et pendant les transferts du récepteur et de la tête de soudage d'un tube à l'autre. En cas d'utilisation simultanée, pendant l'opération de soudage, le rayonnement visible permet le contrôle permanent de l'alignement et de la continuité en renvoyant l'image de tout obstacle se présentant sur le trajet des faisceaux.

Un autre avantage est que l'on peut contrôler les faisceaux jusqu'au miroir de récepteur 17 situé en aval du récepteur et qui peut être placé très près de la tête de traitement, dans l'exemple la tête de soudage.

Des informations utiles peuvent être tirées de la demande de brevet européen précédemment indiquée.

## Revendications

1/ Système d'alignement d'un faisceau optique, ce système comportant :
- un émetteur (11) pour recevoir au moins un faisceau d'entrée (AE) et pour le transmettre sous la forme d'un faisceau de liaison (AL),
- un récepteur mobile (12) à distance dudit émetteur,
- et des moyens de commande pour que ce récepteur reçoive ce faisceau de liaison et le transforme en un faisceau de sortie (PS) aligné sur un axe d'utilisation (24),
- ledit système d'alignement étant caractérisé par le fait que lesdits moyens de commande permettent un alignement précis dudit faisceau de sortie sur ledit axe d'utilisation à l'aide de moyens de détection de lumière simplifiés (16, 18).

2/ Système d'alignement selon la revendication 1, ce système comportant :
- ledit émetteur (11) pour recevoir un faisceau principal d'entrée (2) constitué d'un rayonnement principal à utiliser et pour le transmettre sous la forme d'un faisceau principal de liaison (PL) commandable en direction,
- ledit récepteur (12) pour recevoir ce faisceau principal de liaison, et pour lui appliquer une déviation angulaire commandable propre à le transformer en un faisceau principal de sortie (PS) aligné sur un axe d'utilisation (24) lié à une structure extérieure au dit système d'alignement,
- et des moyens d'orientation optique comportant :
- une source auxiliaire (4) pour engendrer un rayonnement auxiliaire sous la forme d'un faisceau auxiliaire d'entrée (6) aligné sur le trajet dudit faisceau principal d'entrée de manière que ce faisceau auxiliaire d'entrée soit transformé par ledit émetteur (11) en un faisceau auxiliaire de liaison (AL) aligné sur le trajet du dit faisceau principal de liaison (PL), et que ce faisceau auxiliaire de liaison soit transformé par ledit récepteur en un faisceau auxiliaire de sortie (AS) aligné sur le trajet dudit faisceau principal de sortie,
- des moyens de commande d'émetteur (15, 16, 7) sensibles à une fraction du rayonnement dudit faisceau auxiliaire de liaison reçu par ledit récepteur pour permettre de commander ledit émetteur de manière que lesdits faisceaux auxiliaire et principal de liaison soit dirigés vers ce récepteur,
- et des moyens de commande de récepteur (17, 18, .7) sensibles à une fraction du rayonnement dudit faisceau auxiliaire de liaison reçu par ledit récepteur pour permettre de commander ladite déviation angulaire de manière que lesdits faisceaux principal et auxiliaire de sortie soient alignés sur ledit axe d'utilisation,
- ledit système d'alignement étant caractérisé par le fait que ledit faisceau auxiliaire d'entrée (AE) est un faisceau tubulaire formé coaxialement autour dudit faisceau principal d'entrée (PE), lesdits moyens de commande d'émetteur et de récepteur étant placés en dehors du trajet dudit rayonnement principal.

3/ Système selon la revendication 2, caractérisé par le fait que lesdits moyens de commande d'émetteur et de récepteur comportent :
- des moyens de renvoi (15, 17) de la lumière dudit faisceau auxiliaire vers ledit émetteur (11),
- et un séparateur annulaire (26) qui entoure ledit faisceau principal d'entrée (PE) et qui dirige la lumière renvoyée par lesdits moyens de renvoi vers des moyens de détection et d'analyse (16, 18, 7).

4/ Système d'alignement selon la revendication 1, ce système comportant :
- ledit émetteur (11) pour recevoir au moins un faisceau d'entrée (AE) et pour le transmettre sous la forme d'un faisceau de liaison (AL) commandable en direction,
- ledit récepteur (12),
- et des moyens de commande d'émetteur (15, 16, 7) sensibles à l'irradiation dudit récepteur par ledit faisceau de liaison pour permettre de commander ledit émetteur de manière qu'il dirige ce faisceau vers ce récepteur,
- ledit système d'alignement étant caractérisé par le fait que lesdits moyens de commande d'émetteur comportent un ensemble rétroréflecteur (15B) lié audit récepteur (12) et constitué de plusieurs rétroréflecteurs (15) renvoyant chacun une partie correspondante dudit faisceau de liaison (AL) dans la direction même de ce faisceau de liaison pour constituer un faisceau rétroréfléchi,
- et un détecteur de faisceau rétroréfléchi lié audit émetteur (11) et formant une image dudit ensemble rétroréflecteur sur un système d'analyse d'image (16, 7) permettant de détecter la position dudit récepteur (12) par rapport au dit faisceau de liaison.

5/ Système selon la revendication 4, caractérisé par le fait que ledit système d'analyse d'image (16, 7) permet de comparer les flux lumineux reçus dans divers éléments d'image qui sont formés respectivement par divers dits rétroréflecteurs (15) et qui font parties de ladite image dudit ensemble rétroréflecteur (15B).

6/ Système selon la revendication 4, caractérisé par le fait que lesdits rétroréflecteurs (15) sont au nombre de trois au moins et sont répartis angulairement en périphérie dudit faisceau de liaison (PL).

7' Système selon la revendication 6, caractérisé par le fait que lesdits rétroflecteurs (15) laissent entre eux des intervalles angulaires pour une lumière utilisable par d'autres dits moyens de commande (17, 18).

8/ Système d'alignement selon la revendication' 1, ce système comportant :
- ledit émetteur (11),
- ledit récepteur (12) recevant ce faisceau de liaison, et lui appliquant une déviation angulaire commandable pour le transformer en ledit faisceau de sortie (PS),
- et des moyens de commande de récepteur pour permettre de commander ladite déviation commandable de manière à aligner ledit faisceau de liaison sur un axe d'utilisation (24) lié à une structure (14) extérieure audit système d'alignement, ces moyens de commande de récepteur comportant eux-mêmes :
- un miroir de récepteur lié audit récepteur (12) pour renvoyer une partie de la lumière dudit faisceau de liaison vers ledit émetteur (11) sous la forme d'un faisceau de retour dont la direction est affectée par ladite déviation commandable,
- et un détecteur écartométrique (18) lié audit émetteur et sensible aux déviations de ce faisceau de retour,
- ledit système d'alignement étant caractérisé par le fait que ledit miroir de récepteur (17) est placé sur le trajet dudit faisceau de sortie (AS) de sorte que ledit faisceau de retour est formé à partir de ce faisceau de sortie et traverse ledit récepteur (12) en retour, ce miroir présentant un axe perpendiculaire à sa surface et étant monté pour s'orienter par rapport à ladite structure extérieure (14) de manière à aligner son axe sur ledit axe d'utilisation (24).

9/ Système selon la revendication 8, caractérisé par le fait que ledit miroir de récepteur (17) est porté à distance du dit récepteur (12) par une pièce de sortie (13) liée à celui-ci, cette pièce de sortie étant munie de moyens d'orientation (13A) qui s'appuient sur ladite structure extérieure (14) pour orienter ledit miroir de récepteur par rapport audit axe d'utilisation (24).

10/ Procédé de traitement par rayonnement, notamment de soudage, à l'intérieur de pièces d'accès difficile, notamment de tubes d'une centrale nucléaire, ce procédé comportant les opérations suivantes,
- on introduit dans une pièce à traiter (14) une tête de traitement (30),
- on engendre un rayonnement de traitement (PE) à distance de cette pièce à traiter,
- et on aligne un faisceau de ce rayonnement selon un axe d'utilisation (24) lié à cette pièce à traiter pour alimenter cette tête de traitement,
- ce procédé étant caractérisé par le fait qu'on aligne ledit faisceau à l'aide d'un système d'alignement choisi selon l'une quelconque des revendications précédentes.

EP 0 331 962 A1

# FIG. 1

# FIG. 2

# FIG. 4

EP 0 331 962 A1

FIG.3

EP 0 331 962 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| X | EP-A-154866 (FIRMA CARL ZEISS ET AL.) * page 6, ligne 28 - page 7, ligne 37; figure 3 * | 1 | B23K26/04 |
| Y | | 2, 4, 5, 8 | |
| Y | PATENT ABSTRACTS OF JAPAN vol. 6, no. 236 (M-173)(1114) 25 novembre 1982, & JP-A-57 137092 (OLYMPUS KOGAKU KOGYO K.K.) 24 août 1982, * voir le document en entier * | 2 | |
| X | EP-A-217077 (FIRMA CARL ZEISS) * le document en entier * | 1 | |
| Y | | 4, 5, 8 | |
| X,D | EP-A-238171 (WESTINGHOUSE ELECTRIC CORPORATION) * colonne 7, ligne 1 - colonne 12, ligne 45; figures 1, 2, 6 * | 1, 10 | |
| A | | 2, 4, 8 | DOMAINES TECHNIQUES RECHERCHES (Int. Cl.4 ) |
| X | PATENT ABSTRACTS OF JAPAN vol. 9, no. 178 (E-330)(1901) 23 juillet 1985, & JP-A-60 047482 (TOSHIBA K.K.) 14 mars 1985, * voir le document en entier * | 1 | B23K |
| A | | 2, 4, 8 | |

Le présent rapport a été établi pour toutes les revendications

| Lieu de la recherche | Date d'achèvement de la recherche | Examinateur |
|---|---|---|
| LA HAYE | 04 JUILLET 1989 | ARAN D.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant